# EUROPEAN PATENT SPECIFICATION

(11) **EP 4 098 685 B1**
(45) Date of publication and mention of the grant of the patent: **19.08.2026**
(21) Application number: 21768048.7
(22) Date of filing: 11.03.2021
(51) Int. Cl.: C08J 9/16, C08L 53/00

(54) **CROSSLINKED OLEFINIC THERMOPLASTIC ELASTOMER FOAMED PARTICLES AND METHOD FOR PRODUCING SAME**
VERNETZTE OLEFINISCHE THERMOPLASTISCHE ELASTOMERSCHAUMTEILCHEN UND VERFAHREN ZUM PRODUZIEREN DERSELBEN
PARTICULES EXPANSÉES D'ÉLASTOMÈRE THERMOPLASTIQUE OLÉFINIQUE RÉTICULÉ ET PROCÉDÉ DE PRODUCTION ASSOCIÉ

(30) Priority: 12.03.2020 JP 2020043208
(43) Date of publication of application: 07.12.2022
(73) Proprietor: JSP Corporation, Tokyo 100-0005 (JP)
(72) Inventor: MOCHIDA Naoki, Yokkaichi-shi, Mie 510-0881 (JP)
(74) Representative: Kramer Barske Schmidtchen Patentanwälte PartG mbB
(86) International application number: PCT/JP2021/009805
(87) International publication number: WO 2021/182576

(56) References cited:
- WO-A1-2018/088551
- JP-A- 2016 017 144
- JP-A- 2016 216 527
- JP-A- H07 309 967
- JP-A- S5 578 029
- JP-A- S60 179 427
- JP-A- S60 179 428
- JP-A- S60 210 642
- US-A1- 2016 009 888

## Description

### TECHNICAL FIELD

The present invention relates to a crosslinked olefin-based thermoplastic elastomer expanded bead and a method for producing the same.

### BACKGROUND ART

Patent Literature 1 describes expanded beads obtained by expanding polymer beads containing a crosslinked olefin-based thermoplastic elastomer. Expanded beads of this type have characteristics such as lightness, excellent repulsiveness, and tensile properties, and thus are used in a wide range of applications such as cushioning materials, shoe soles, building materials, and members for automobiles.
Patent Document 2 discloses a crosslinked olefin-based expanded bead comprising a polyethylene base polymer and a brominated bisphenol-based flame retardant.

In recent years, in order to expand the use of expanded beads containing an olefin-based thermoplastic elastomer, it has been expected to further enhance the flame retardancy of the expanded beads.

### PRIOR ART LITERATURE

### Patent Documents

Patent Document 1: JP-A-2016-216527
Patent Document 2: US 2016 009 888 A1

### SUMMARY OF THE INVENTION

### PROBLEMS TO BE SOLVED BY THE INVENTION

In order to enhance the flame retardancy of expanded beads containing an olefin-based thermoplastic elastomer, a method of simply adding a flame retardant to the olefin-based thermoplastic elastomer is conceivable. However, when the flame retardant is added to the olefin-based thermoplastic elastomer in a process of producing expanded beads, the flame retardant inhibits a crosslinking reaction in a step of crosslinking the olefin-based thermoplastic elastomer, and the expandability of polymer beads containing the olefin-based thermoplastic elastomer has been deteriorated in some cases. In addition, even when the polymer beads can be expanded, fusibility of the obtained expanded beads is lowered, and it has become difficult to perform in-mold molding in some cases.

The present invention has been made in view of such a background, and an object of the present invention is to provide a crosslinked olefin-based thermoplastic elastomer expanded bead having excellent flame retardancy, expandability, and fusibility, and a method for producing the same.

### MEANS FOR SOLVING THE PROBLEMS

One aspect of the present invention is a crosslinked olefin-based thermoplastic elastomer expanded bead containing:
a base polymer containing an olefin-based thermoplastic elastomer; and
a brominated bisphenol-based flame retardant having a chemical structure represented by the following general formula (1),
wherein a value of a difference Tm_{TPO}-T_{FR} between a melting point Tm_{TPO} of the olefin-based thermoplastic elastomer and a temperature T_{FR} which is a lower one of a glass transition temperature Tg_{FR} and a melting point Tm_{FR} of the brominated bisphenol-based flame retardant is -5°C or higher and 40°C or lower, and
wherein a xylene insoluble content is 5 mass% or more and 80 mass% or less.

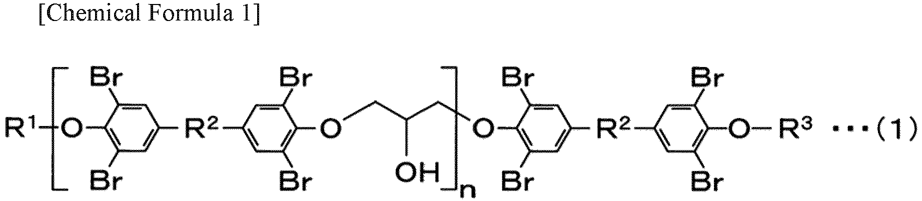

It is noted that in the general formula (1), R¹ and R³ are monovalent substituents, R² is a divalent substituent, and n is an integer of 1 or more and 6 or less.

Another aspect of the present invention is a method for producing the crosslinked olefin-based thermoplastic elastomer expanded bead according to the above-described aspect, the method including:
a dispersion step of dispersing a polymer bead in non-foamed state in a dispersion medium in a sealed container, the polymer bead containing the base polymer and the brominated bisphenol-based flame retardant;
a crosslinking step of reacting the polymer beads with an organic peroxide as a crosslinking agent to crosslink the olefin-based thermoplastic elastomer;
an expanding agent impregnation step of impregnating the polymer bead with an expanding agent to prepare expandable polymer bead; and
an expanding step of expanding the expandable polymer bead.

### EFFECTS OF THE INVENTION

The crosslinked olefin-based thermoplastic elastomer expanded bead (hereinafter abbreviated as "expanded bead") contains a brominated bisphenol-based flame retardant having a chemical structure represented by the above general formula (1). A value of a difference Tm_{TPO}-T_{FR} between a melting point Tm_{TPO} of the olefin-based thermoplastic elastomer and a temperature T_{FR} which is a lower one of a glass transition temperature Tg_{FR} and a melting point Tm_{FR} of the brominated bisphenol-based flame retardant is within the above specific range.

By adding the specific brominated bisphenol-based flame retardant to the base polymer containing the olefin-based thermoplastic elastomer, the olefin-based thermoplastic elastomer can be easily crosslinked in the process of producing the expanded bead. This can improve expandability and fusibility of the expanded bead. In addition, by adding the specific brominated bisphenol-based flame retardant to the base polymer containing the olefin-based thermoplastic elastomer, the flame retardancy of the expanded beads can be improved while the fusibility of the expanded bead is maintained.

As a result, the crosslinked olefin-based thermoplastic elastomer expanded bead according to the above-described aspect has excellent flame retardancy, expandability, and fusibility.

In the method for producing the crosslinked olefin-based thermoplastic elastomer expanded bead, the specific brominated bisphenol-based flame retardant is used as a flame retardant. Therefore, the method for producing the crosslinked olefin-based thermoplastic elastomer expanded bead according to the above-described aspect makes it possible to prevent the flame retardant from inhibiting a crosslinking reaction, and to easily obtain the expanded bead having excellent flame retardancy, expandability, and fusibility.

### MODES FOR CARRYING OUT THE INVENTION

### (Expanded bead)

The expanded bead contains a base polymer and a brominated bisphenol-based flame retardant.

### <Base polymer>

The base polymer contains an olefin-based thermoplastic elastomer (TPO). Examples of the olefin-based thermoplastic elastomer include a mixture of a hard segment composed of a propylene-based resin and a soft segment composed of an ethylene-based rubber, and a block copolymer of a hard segment composed of a polyethylene block and a soft segment composed of an ethylene/α-olefin copolymer block. Among these olefin-based thermoplastic elastomers, the base polymer preferably contains a block copolymer of a hard segment composed of a polyethylene block and a soft segment composed of an ethylene/α-olefin copolymer block.

In the mixture of the hard segment composed of the propylene-based resin and the soft segment composed of the ethylene-based rubber, examples of the propylene-based resin include a propylene homopolymer and a copolymer of propylene and ethylene or an α-olefin having 4 to 8 carbon atoms. On the other hand, examples of the ethylene-based rubber include a copolymer of ethylene and an α-olefin having 3 to 8 carbon atoms, and a copolymer of ethylene and a non-conjugated diene such as 5-vinyl-2-norbornene, 5-ethylidene-2-norbornene, 5-methylene-2-norbornene, or dicyclopentadiene.

In the block copolymer of the hard segment composed of the polyethylene block and the soft segment composed of the ethylene/α-olefin copolymer block, examples of the polyethylene block include an ethylene homopolymer and a copolymer of ethylene and an α-olefin having 3 to 8 carbon atoms. On the other hand, examples of the ethylene/α-olefin copolymer block include a copolymer of ethylene and an α-olefin having 3 to 20 carbon atoms. Examples of the α-olefin copolymerized with ethylene in the ethylene/α-olefin copolymer block include propylene, 1-butene, 1-pentene, 1-hexene, 1-heptene, 1-octene, 1-nonene, 1-decene, 3-methyl-1-butene, and 4-methyl-1-pentene.

Among them, the α-olefin in the ethylene/α-olefin copolymer block is preferably one or more kinds of α-olefins selected from the group consisting of propylene, 1-butene, 1-hexene, and 1-octene, and particularly preferably 1-octene, from the viewpoint of industrial availability, various characteristics, economic efficiency, and the like.

A proportion of a structural unit derived from the ethylene contained in the polyethylene block is preferably 95 mass% or more, and more preferably 98 mass% or more with respect to a mass of the polyethylene block. In addition, a proportion of a structural unit derived from the α-olefin in the ethylene/α-olefin copolymer block is preferably 5 mass% or more, more preferably 10 mass% or more, and still more preferably 15 mass% or more, with respect to a mass of the ethylene/α-olefin copolymer block. The proportion of the structural unit derived from the α-olefin in the ethylene/α-olefin copolymer block is preferably 50 mass% or less.

The proportion of the structural unit derived from the ethylene contained in the polyethylene block and the proportion of the structural unit derived from the α-olefin contained in the ethylene/α-olefin copolymer block can be calculated based on a DSC curve in differential scanning calorimetry or an NMR spectrum in nuclear magnetic resonance.

As the olefin-based thermoplastic elastomer, a commercially available olefin-based thermoplastic elastomer may also be used. Examples of the commercially available olefin-based thermoplastic elastomers include "Infuse (registered trademark)" manufactured by The Dow Chemical Company, "Affinity (registered trademark)" manufactured by The Dow Chemical Company, "THERMORUN (registered trademark)" manufactured by Mitsubishi Chemical Corporation, "MILASTOMER (registered trademark)" manufactured by Mitsui Chemicals, Inc., "TAFMER (registered trademark)" manufactured by Mitsui Chemicals, Inc., "Sumitomo TPE" manufactured by Sumitomo Chemical Co., Ltd., and "Prime TPO (registered trademark)" manufactured by Prime Polymer Co., Ltd.

A value of a difference Tm_{TPO}-T_{FR} between a melting point Tm_{TPO} of the olefin-based thermoplastic elastomer and a temperature T_{FR} which is a lower one of a glass transition temperature Tg_{FR} and a melting point Tm_{FR} of the brominated bisphenol-based flame retardant is -5°C or higher and 40°C or lower. By setting the value of Tm_{TPO}-T_{FR} within the above specific range, the in-mold moldability of the expanded beads can be improved. When the value of Tm_{TPO}-T_{FR} is smaller than the specific range, the fusibility between the expanded beads may be deteriorated. From the viewpoint of improving the in-mold moldability and the fusibility in a well-balanced manner, a lower limit on the value of Tm_{TPO}-T_{FR} is preferably 0°C, more preferably 5°C, still more preferably 10°C, and particularly preferably 20°C. From the same viewpoint, an upper limit on the value of Tm_{TPO}-T_{FR} is preferably 38°C and more preferably 35°C.

As a cause of the deterioration in fusibility described above, the following two reasons are conceivable. First, it is considered that in the case where the T_{FR} of the brominated bisphenol-based flame retardant is excessively high and the value of Tm_{TPO}-T_{FR} does not satisfy the above specific range, surfaces of the expanded beads are not easily softened when the expanded beads are molded. Secondly, it is considered that, in the case where the value of Tm_{TPO}-T_{FR} does not satisfy the above specific range, fluidity of the base polymer at a crosslinking temperature T_{CL} (which will be described later) in the crosslinking of the olefin-based thermoplastic elastomer decreases, the crosslinking agent is not easily impregnated into polymer beads, and crosslinking of the olefin-based thermoplastic elastomer tends to be uneven.

On the other hand, in the case where the T_{FR} of the brominated bisphenol-based flame retardant is excessively low and the value of Tm_{TPO}-T_{FR} is larger than the specific range, the brominated bisphenol-based flame retardant may be easily decomposed when exposed to a high-temperature environment, for example, in the process of producing the expanded beads. In addition, reactivity of the brominated bisphenol-based flame retardant increases, and the brominated bisphenol-based flame retardant may inhibit the crosslinking reaction of the base polymer to impair expandability of the expanded beads.

Here, in the case where the brominated bisphenol-based flame retardant is a compound having both the melting point Tm_{FR} and the glass transition temperature Tg_{FR}, the "temperature T_{FR} which is a lower one of the glass transition temperature Tg_{FR} and the melting point Tm_{FR} of the brominated bisphenol-based flame retardant" is, literally, a temperature which is a lower one of the melting point Tm_{FR} and the glass transition temperature Tg_{FR}. In compounds of this type, the glass transition temperature Tg_{FR} is often lower than the melting point Tm_{FR}.

On the other hand, in the case where the brominated bisphenol-based flame retardant is a compound having only either one of the melting point Tm_{FR} and the glass transition temperature Tg_{FR}, the "temperature T_{FR} which is a lower one of the glass transition temperature Tg_{FR} and the melting point Tm_{FR} of the brominated bisphenol-based flame retardant" is defined to be a temperature of either the melting point Tm_{FR} or the glass transition temperature Tg_{FR} which the compound has.

The glass transition temperature Tg_{FR} of the brominated bisphenol-based flame retardant means a midpoint glass transition temperature as measured by heat flux differential scanning calorimetry described in JIS K 7121-1987. Specifically, based on a heat flux differential scanning calorimetric method described in JIS K 7121-1987, first, a sample is heated from 30°C to 200°C at a heating rate of 20°C/min, and then cooled from 200°C to 30°C at a cooling rate of 20°C/min. Thereafter, the temperature is raised again from 30°C to 200°C at a heating rate of 20°C/min to obtain a DSC curve at second temperature rise. The glass transition temperature Tg_{FR} of the brominated bisphenol-based flame retardant can be calculated using the DSC curve obtained at the second temperature rise.

The melting point Tm_{FR} of the brominated bisphenol-based flame retardant can be measured based on a plastic transition temperature measurement method defined in JIS K 7121-1987. Specifically, first, based on the heat flux differential scanning calorimetric method described in JIS K 7121-1987, a sample is heated from 30°C to 200°C at a heating rate of 10°C/min, and then cooled down to 30°C at a cooling rate of 10°C/min. Thereafter, the temperature is raised again from 30°C to 200°C at a temperature raising rate of 10°C/min to obtain a DSC curve at the second temperature rise. Then, a top temperature of an endothermic peak as determined by the DSC curve obtained at the second temperature rise can be defined as the melting point Tm_{FR} of the brominated bisphenol-based flame retardant. When a plurality of endothermic peaks appear in the DSC curve obtained at the second temperature rise, the top temperature of the endothermic peak having the largest area is defined as the melting point.

The melting point Tm_{TPO} of the olefin-based thermoplastic elastomer is preferably 110°C or higher and 130°C or lower. In this case, the fusibility of the expanded beads during in-mold molding can be further improved, and molding recoverability of a molded article during in-mold molding can be further improved. A lower limit on the melting point Tm_{TPO} of the olefin-based thermoplastic elastomer is preferably 112°C, and more preferably 115°C. An upper limit on the melting point Tm_{TPO} of the olefin-based thermoplastic elastomer is preferably 128°C, and more preferably 125°C.

The melting point Tm_{TPO} of the olefin-based thermoplastic elastomer can be measured based on the plastic transition temperature measurement method defined in JIS K 7121-1987. Specifically, based on the heat flux differential scanning calorimetric method described in JIS K 7121-1987, a sample is first heated from 30°C to 200°C at a heating rate of 10°C/min, and then cooled down to 30°C at a cooling rate of 10°C/min. Thereafter, the temperature is raised again from 30°C to 200°C at a temperature raising rate of 10°C/min to obtain a DSC curve at the second temperature rise. Then, a top temperature of an endothermic peak as determined by the DSC curve obtained at the second temperature rise can be defined as melting point Tm_{TPO} of the olefin-based thermoplastic elastomer. When a plurality of endothermic peaks appear in the DSC curve obtained at the second temperature rise, the top temperature of the endothermic peak having the largest area is defined as the melting point. In the measurement of the melting point Tm_{TPO} of the olefin-based thermoplastic elastomer, any of the olefin-based thermoplastic elastomer as a raw material for the expanded beads, the expanded beads, and the expanded bead molded article may be used as the sample. In Examples which will be described later, the melting point Tm_{TPO} of the olefin-based thermoplastic elastomer was measured using the olefin-based thermoplastic elastomer as a raw material for the expanded beads.

A lower limit on the flexural modulus of the olefin-based thermoplastic elastomer is preferably 10 MPa or more, and more preferably 20 MPa or more, from the viewpoint of further improving the in-mold moldability of the expanded beads, the flexibility of the expanded bead molded article to be obtained, and the like. From the same viewpoint, an upper limit on the flexural modulus of the olefin-based thermoplastic elastomer is preferably 50 MPa and more preferably 40 MPa. The flexural modulus of the olefin-based thermoplastic elastomer can be determined by measurement in accordance with a measurement method described in JIS K 7171:2008. In the measurement of the flexural modulus of the olefin-based thermoplastic elastomer, any of the olefin-based thermoplastic elastomer as a raw material for the expanded beads, the expanded beads, and the expanded bead molded article may be used as the sample. In Examples which will be described later, the flexural modulus of the olefin-based thermoplastic elastomer was measured using the olefin-based thermoplastic elastomer as a raw material for the expanded beads.

An apparent density of the expanded beads is preferably 40 kg/m³ or more and 150 kg/m³ or less, and more preferably 40 kg/m³ or more and 120 kg/m³ or less. The flame retardancy of the expanded bead molded article can be further improved by in-mold molding of the expanded beads having an apparent density within the above specific range.

The base polymer may contain a polymer other than the olefin-based thermoplastic elastomer as long as the above-described operational effects are not impaired. As such a polymer, thermoplastic resins such as polyolefin-based resins and polystyrene-based resins, thermoplastic elastomers other than the olefin-based thermoplastic elastomer, and the like can be used. A content of these polymers is preferably 25 mass% or less, more preferably 20 mass% or less, still more preferably 10 mass% or less, even still more preferably 5 mass% or less, and most preferably 0 mass% (i.e., the base polymer does not contain a polymer other than the olefin-based thermoplastic elastomer) with respect to the base polymer.

When the base polymer contains a polyolefin-based resin, the polyolefin-based resin contained in the base polymer is preferably a polyethylene-based resin. In this case, a content of the polyethylene-based resin is preferably 25% mass% or less with respect to the base polymer.

### <Brominated bisphenol-based flame retardant>

The expanded beads contain a brominated bisphenol-based flame retardant having a chemical structure represented by the above general formula (1).

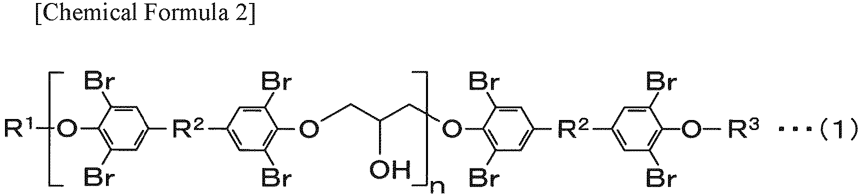

It is noted that R¹ and R³ in the above general formula (1) are monovalent substituents, R² is a divalent substituent, and n is an integer of 1 or more and 6 or less.

Since the expanded beads contain a brominated bisphenol-based flame retardant having a chemical structure represented by the above general formula (1), when the olefin-based thermoplastic elastomer is crosslinked in the process of producing the expanded beads, inhibition of a crosslinking reaction by the flame retardant is avoided, and the crosslinking reaction of the olefin-based thermoplastic elastomer easily proceeds. As a result, deterioration in expandability of the expanded beads can be easily avoided.

The reason why the deterioration in expandability can be avoided by using the specific flame retardant is, for example, considered as follows. Specifically, when a flame retardant conventionally used for a resin or an elastomer other than the olefin-based thermoplastic elastomer is added in the process of producing the expanded beads, peroxide radicals generated from an organic peroxide as the crosslinking agent react with the flame retardant, and a large amount of the peroxide radicals are consumed.

On the other hand, the brominated bisphenol-based flame retardant having a chemical structure represented by the above general formula (1) has a nature of hardly reacting with peroxide radicals due to its chemical structure. Therefore, the crosslinking reaction of the olefin-based thermoplastic elastomer is hardly inhibited, and the crosslinking reaction can be easily allowed to proceed. Therefore, it is considered that the expanded beads are excellent in expandability and have a good appearance.

R¹ and R³ in the above general formula (1) are monovalent substituents. R¹ and R³ may be the same substituents or different substituents. Examples of R¹ and R³ include an alkyl group, a halogenated alkyl group having 1 to 5 carbon atoms, an alkenyl group, a halogenated alkenyl group having 1 to 5 carbon atoms, a glycidyl group, a halogenated aryl group, and an alicyclic epoxy group.

R¹ and R³ in the above general formula (1) are preferably substituents containing no halogen atom. When R¹ and R³ in the above general formula (1) are substituents containing no halogen atom, the crosslinking reaction can be more easily allowed to proceed when the olefin-based thermoplastic elastomer is crosslinked in the process of producing the expanded beads. As a result, deterioration in expandability of the expanded beads can be more reliably avoided. From the viewpoint of further reducing the reactivity between the brominated bisphenol-based flame retardant and the peroxide radicals and more reliably avoiding the deterioration in expandability of the expanded beads, R¹ and R³ in the above general formula (1) are more preferably glycidyl groups.

Examples of R² in the above general formula (1) include a propane-2,2-diyl group (-C(CH₃)₂-), a perfluoropropane-2,2-diyl group (-C(CF₃)₂-), a methylene group (-CH₂-), and a sulfonyl group (-S(O)₂-). That is, the brominated bisphenol-based flame retardant may have skeleton structures derived from various bisphenols such as a bisphenol A skeleton, a bisphenol F skeleton, a bisphenol AF skeleton, and a bisphenol S skeleton.

R² in the above general formula (1) is preferably a propane-2,2-diyl group. The brominated bisphenol-based flame retardant in which R² in the above general formula (1) is a propane-2,2-diyl group, that is, the brominated bisphenol-based flame retardant having a bisphenol A skeleton has more excellent flame retardancy. The brominated bisphenol-based flame retardant having a bisphenol A skeleton has a high decomposition temperature. In addition, the brominated bisphenol-based flame retardant having a bisphenol A skeleton is hardly decomposed even when exposed to a high-temperature environment in the process of producing the expanded beads or the like.

n in the above general formula (1) is an integer of 1 or more and 6 or less. When n in the above general formula (1) is within the specific range, the flame retardancy, expandability, and in-mold moldability of the expanded beads can be improved.

When n in the above general formula (1) is 0, the brominated bisphenol-based flame retardant may be easily molten or decomposed when exposed to a high-temperature environment in the process of producing the expanded beads or the like. In addition, since the reactivity of the brominated bisphenol-based flame retardant tends to be excessively high, and the crosslinking reaction of the olefin-based thermoplastic elastomer is inhibited. Therefore the expandability of the expanded beads may be impaired.

On the other hand, when n in the above general formula (1) is 7 or more, the T_{FR} of the brominated bisphenol-based flame retardant is increased, and the in-mold moldability of the expanded beads may be deteriorated.

From the viewpoint of further enhancing the effect for improving the expandability, flame retardancy, and fusibility of the expanded beads, the brominated bisphenol-based flame retardant is particularly preferably a brominated bisphenol A epoxy resin having a chemical structure represented by the following general formula (2):

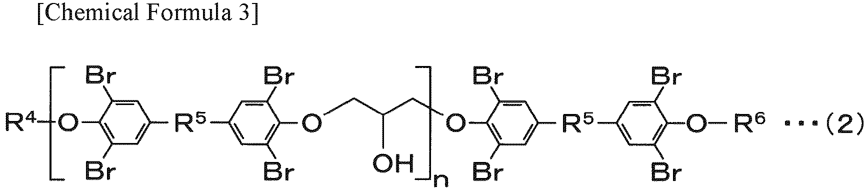

It is noted that R⁴ and R⁶ in the above general formula (2) are glycidyl groups, R⁵ is a propane-2,2-diyl group, and n is an integer of 1 or more and 6 or less.

A lower limit on an amount of the brominated bisphenol-based flame retardant to be contained is preferably 3 parts by mass, more preferably 5 parts by mass, and still more preferably 8 parts by mass, with respect to 100 parts by mass of the base polymer. An upper limit on the amount of the brominated bisphenol-based flame retardant to be contained is preferably 35 parts by mass, more preferably 30 parts by mass, and still more preferably 25 parts by mass, with respect to 100 parts by mass of the base polymer. By setting the amount of the brominated bisphenol-based flame retardant to be contained within the above-described specific range, it is possible to further improve the flame retardancy while ensuring the fusibility, expandability, and the like of the expanded beads.

The glass transition temperature Tg_{FR} of the brominated bisphenol-based flame retardant is preferably 80°C or higher and 130°C or lower. By using the brominated bisphenol-based flame retardant having a glass transition temperature Tg_{FR} within the above specific range, the fusibility of the expanded beads can be further enhanced. In addition, since the fluidity of the base polymer in the crosslinking step which will be described later can be enhanced, expanded beads in which the olefin-based thermoplastic elastomer is more uniformly crosslinked also inside can be obtained. A lower limit on the glass transition temperature Tg_{FR} of the brominated bisphenol-based flame retardant is more preferably 83°C. An upper limit on the glass transition temperature Tg_{FR} of the brominated bisphenol-based flame retardant is more preferably 125°C, still more preferably 120°C, and particularly preferably 110°C.

The brominated bisphenol-based flame retardant preferably has a number average molecular weight of 1500 or more and 5000 or less. Since the brominated bisphenol-based flame retardant having a number average molecular weight within the above specific range has moderately high fluidity, the expandability of the expanded beads can be further improved. As a result, expanded beads having a more excellent appearance can be obtained. In addition, in the brominated bisphenol-based flame retardant having a number average molecular weight within the above specific range, influence of the substituents R¹ and R³ on the crosslinking reaction of the olefin-based thermoplastic elastomer can be reduced, because of a relatively small proportion of the substituents R¹ and R³ present at a molecular terminal per unit mass. As a result, inhibition of the crosslinking reaction of the olefin-based thermoplastic elastomer by the flame retardant can be more reliably avoided, and deterioration in expandability of the expanded beads can be more reliably avoided. A lower limit on the number average molecular weight of the brominated bisphenol-based flame retardant is more preferably 1700. An upper limit on the number average molecular weight of the brominated bisphenol-based flame retardant is more preferably 4500, still more preferably 4000, and particularly preferably 3000. The number average molecular weight of the brominated bisphenol-based flame retardant can be measured by a known method such as a GPC method.

### <Other additives>

In addition, the expanded beads may contain additives such as an antioxidant, an ultraviolet prevention agent, an antistatic agent, a flame retardant aid, a metal deactivator, and a conductive filler as long as the above-described actions and effects are not impaired. An amount of these additives to be contained is preferably 20 parts by mass or less, more preferably 10 parts by mass or less, and still more preferably 5 parts by mass or less, with respect to 100 parts by mass of the base polymer. Examples of the flame retardant aid include antimony trioxide, zinc stannate, and 2,3-dimethyl-2,3-diphenylbutane. The amount of the flame retardant aid to be contained is preferably 0.1 times or more and 0.5 times or less, and more preferably 0.2 times or more and 0.4 times or less the amount of the flame retardant to be contained, in mass ratio.

### <Structure of expanded bead>

The expanded beads may have a single layer structure formed of a foam containing a base polymer and a brominated bisphenol-based flame retardant, or may have a multilayer structure including a core layer, in a foamed state, containing the base polymer and the brominated bisphenol-based flame retardant and a covering layer covering the core layer. In the latter case, a surface of the core layer is covered with the covering layer, and thus characteristics different from those of the core layer can be imparted to the surfaces of the expanded beads. Therefore, for example, the amount of the brominated bisphenol-based flame retardant to be contained in the core layer can be increased to further enhance the flame retardancy of the expanded beads, and the covering layer can improve the fusibility between the expanded beads.

The covering layer may contain at least one or more thermoplastic polymers selected from the group consisting of a thermoplastic resin and a thermoplastic elastomer. Examples of the thermoplastic resin that can be contained in the covering layer include polyolefin-based resins and polystyrene-based resins. Examples of the thermoplastic elastomer that can be contained in the covering layer include olefin-based thermoplastic elastomers. The olefin-based thermoplastic elastomer contained in the covering layer may be the same elastomer as the olefin-based thermoplastic elastomer in the base polymer, or may be an elastomer different from the olefin-based thermoplastic elastomer in the base polymer.

The thermoplastic polymer contained in the covering layer may be in a foamed state or a non-foamed state. In addition, a mass ratio between the core layer and the covering layer in the entire expanded beads is preferably core layer : covering layer = 99.5 : 0.5 to 70 : 30, more preferably 99 : 1 to 80 : 20, and still more preferably 97 : 3 to 90 : 10.

In addition, the covering layer may contain additives such as an ultraviolet prevention agent, an antistatic agent, a flame retardant, a flame retardant aid, a metal deactivator, and a conductive filler as long as the above-described actions and effects are not impaired. An amount of these additives to be contained is preferably 20 parts by mass or less, more preferably 10 parts by mass or less, and still more preferably 5 parts by mass or less, with respect to 100 parts by mass of the thermoplastic polymer.

### <Xylene insoluble content in expanded bead>

The xylene insoluble content of the expanded beads is 5% or more and 80% or less. The xylene insoluble content of the expanded beads shows a larger value as a crosslinking degree of the olefin-based thermoplastic elastomer is higher. By setting the xylene insoluble content of the expanded beads within the above specific range, the olefin-based thermoplastic elastomer can be appropriately crosslinked, and the repulsiveness and tensile properties of the expanded beads can be improved. A lower limit on the xylene insoluble content of the expanded beads is preferably 10%, more preferably 20%, and still more preferably 30%. An upper limit on the xylene insoluble content of the expanded beads is preferably 70%, and more preferably 60%.

In the present specification, the xylene insoluble content of the expanded beads means a xylene insoluble content by a thermal xylene extraction method. A method for measuring the xylene insoluble content is specifically as follows. First, a mass of expanded beads of about 1.0 g is measured, and this value is defined as a mass W1 before extraction. The above-described expanded beads are then placed in a 150-ml round bottom flask and about 200 ml of xylene is added. The round bottom flask is heated with a mantle heater for reflux for 6 hours, and then a residue remaining undissolved is filtered with a 100-mesh wire net to be separated. The obtained residue is dried in a vacuum dryer at 80°C for 8 hours, and then a mass W2 of a dried product is measured. Then, a mass percentage [(W2/W1) × 100] (%) of the mass W2 of the dried product to the mass W1 before extraction is defined as a xylene insoluble content.

### (Method for producing expanded bead)

The expanded beads can be produced by various methods. For example, a first aspect of the method for producing the expanded bead includes:
a dispersion step of dispersing a polymer bead in non-foamed state in a dispersion medium, the polymer bead containing the base polymer and the brominated bisphenol-based flame retardant;
a crosslinking step of reacting the polymer beads with an organic peroxide as a crosslinking agent to crosslink the olefin-based thermoplastic elastomer;
an expanding agent impregnation step of impregnating the polymer bead with an expanding agent to prepare expandable polymer bead; and
an expanding step of expanding the expandable polymer bead.

A value of a difference Tm_{TPO}-T_{FR} between a melting point Tm_{TPO} of the olefin-based thermoplastic elastomer and a temperature T_{FR} which is a lower one of a glass transition temperature Tg_{FR} and a melting point Tm_{FR} of the brominated bisphenol-based flame retardant, in the polymer beads used in the dispersion step, is -5°C or higher and 40°C or lower. A flexural modulus of the olefin-based thermoplastic elastomer in the polymer beads used in the dispersion step is preferably 10 MPa or more and 50 MPa or less.

### <Dispersion step>

The polymer beads used in the dispersion step can be prepared by a known method. For example, in a case of preparing expanded beads made of a foam containing a base polymer and a brominated bisphenol-based flame retardant, first, a polymer composition containing the base polymer and the brominated bisphenol-based flame retardant is melt-kneaded and extruded to prepare a strand of the polymer composition. Polymer beads can be obtained by cutting the strand into desired dimensions using a pelletizer or the like.

In a case of preparing expanded beads having a multilayer structure including a core layer, in a foamed state, containing a base polymer and a brominated bisphenol-based flame retardant, and a covering layer covering the core layer, a polymer composition which serves as the core layer and a polymer composition which serves as the covering layer are co-extruded to prepare a strand having a multilayer structure including the core layer and the covering layer covering the periphery of the core layer. Polymer beads having a multilayer structure can be obtained by cutting the strand into desired dimensions using a pelletizer or the like.

In the dispersion step, polymer beads in a non-foamed state are dispersed in a dispersion medium in a sealed container. As the dispersion medium, for example, water, ethylene glycol, glycerin, methanol, ethanol, or the like can be used. The dispersion medium is preferably water. In addition, the dispersion medium may contain a dispersant or a surfactant in order to suppress aggregation of polymer beads. As the dispersant, for example, an organic dispersant such as polyvinyl alcohol, polyvinylpyrrolidone, or methyl cellulose, an inorganic dispersant such as aluminum oxide, zinc oxide, kaolin, mica, magnesium phosphate, or tricalcium phosphate, or the like can be used. As the surfactant, an anionic surfactant such as sodium oleate or sodium dodecylbenzenesulfonate, a nonionic surfactant, or the like can be used.

### <Crosslinking step>

In the crosslinking step, the polymer beads in the dispersion medium are reacted with an organic peroxide as the crosslinking agent to crosslink the olefin-based thermoplastic elastomer.

In the crosslinking step, an organic peroxide capable of crosslinking the olefin-based thermoplastic elastomer in the base polymer can be used as the crosslinking agent. Examples of such an organic peroxide that can be used include Percumyl type organic peroxides such as dicumyl peroxide and tert-butylcumyl peroxide, Perbutyl type organic peroxides such as 1,1-bis(tert-butylperoxy)-3,3,5-trimethylcyclohexane, 2,5-dimethyl-2,5-di(tert-butylperoxy)hexane, and di-tert-butyl peroxide, Perhexyl type organic peroxides such as tert-hexylperoxy benzoate, and Perocta type organic peroxides such as 1,1,3,3-tetramethylbutylperoxy-2-ethylhexanoate. These organic peroxides may be used singly, or two or more thereof may be used in combination. Among them, the crosslinking agent is preferably a Percumyl type organic peroxide and a Perbutyl type organic peroxide, and more preferably dicumyl peroxide.

An amount of the crosslinking agent contained is preferably 0.1 parts by mass or more and 8 parts by mass or less, and more preferably 0.2 parts by mass or more and 5 parts by mass or less, with respect to 100 parts by mass of the base polymer. In this case, the base polymer is appropriately crosslinked, and expanded beads excellent in molding recoverability and mechanical properties can be easily obtained.

In the crosslinking step, from the viewpoint of promoting the crosslinking reaction, it is preferable to heat the dispersion medium and the polymer beads to a temperature equal to or higher than a temperature at which the base polymer is softened and the organic peroxide as the crosslinking agent is activated. More specifically, the crosslinking temperature T_{CL} of the olefin-based thermoplastic elastomer in the crosslinking step is preferably a temperature equal to or higher than the melting point Tm_{TPO} of the olefin-based thermoplastic elastomer and equal to or higher than a one-hour half-life temperature T₁ₕ of the organic peroxide. From the viewpoint of more reliably providing the effect for promoting the crosslinking reaction, the crosslinking temperature T_{CL} is more preferably Tm_{TPO} or higher and Tm_{TPO} + 80°C or lower and T₁ₕ or higher and T₁ₕ + 40°C or lower. A retention time of the temperature in the crosslinking step is preferably 1 minute or more and 200 minutes or less.

The crosslinking temperature T_{CL} of the olefin-based thermoplastic elastomer in the crosslinking step is preferably higher than the temperature T_{FR} + 30°C, the temperature T_{FR} being a lower one of the glass transition temperature Tg_{FR} and the melting point Tm_{FR} of the brominated bisphenol-based flame retardant. In the crosslinking step, it is preferable to increase the crosslinking temperature T_{CL} from the viewpoint of impregnating the crosslinking agent into the inside of the polymer beads. However, depending on a flame retardant to be contained, when the crosslinking temperature T_{CL} increases, the reactivity between the brominated bisphenol-based flame retardant and the peroxide radicals increases, and the brominated bisphenol-based flame retardant may interfere with the crosslinking reaction.

On the other hand, the specific brominated bisphenol-based flame retardant used in the expanded beads has a nature of hardly inhibiting the crosslinking reaction even at a temperature higher than T_{FR} + 30°C. Therefore, the specific brominated bisphenol-based flame retardant can be used to set the crosslinking temperature T_{CL} to a temperature higher than T_{FR} + 30°C. By setting the crosslinking temperature T_{CL} within the above specific range, the crosslinking agent is more easily impregnated into the polymer beads. Thus, the olefin-based thermoplastic elastomer can be crosslinked more uniformly throughout the expanded beads. In addition, expanded beads having a spherical shape can be more stably produced. As a result, the fusibility of the expanded beads can be further improved, and variations in physical properties of the resulting expanded bead molded article can be further suppressed. From the viewpoint of further enhancing these operational effects, the crosslinking temperature T_{CL} is more preferably higher than T_{FR} + 40°C, and still more preferably higher than T_{FR} + 50°C. An upper limit on the crosslinking temperature T_{CL} is generally T_{FR} of the brominated bisphenol-based flame retardant + 100°C.

### <Expanding agent impregnation step>

In the expanding agent impregnation step, the polymer beads are impregnated with an expanding agent to prepare expandable polymer beads. The expanding agent impregnation step may be performed before the crosslinking step, or may be performed after the crosslinking step. The expanding agent impregnation step and the crosslinking step may be performed in parallel.

As the expanding agent, for example, an inorganic physical expanding agent including air, nitrogen, carbon dioxide, argon, helium, oxygen, or neon, an organic physical agent including an aliphatic hydrocarbon such as propane, normal butane, isobutane, normal pentane, isopentane, or normal hexane, an alicyclic hydrocarbon such as cyclohexane or cyclopentane, a halogenated hydrocarbon such as chlorofluoromethane, trifluoromethane, 1,1-difluoroethane, 1,1,1,2-tetrafluoroethane, methyl chloride, ethyl chloride, or methylene chloride, dimethyl ether, diethyl ether, or methyl ethyl ether can be used. These expanding agents may be used singly, or two or more thereof may be used in combination.

The expanding agent is preferably an inorganic physical expanding agent that has a low environmental load and is inexpensive, more preferably one or more of nitrogen, air, and carbon dioxide, and still more preferably carbon dioxide.

An amount of the expanding agent to be added may be appropriately set according to the type of the expanding agent, the desired bulk density of the expanded beads, and the like. For example, when the expanding agent is an organic physical expanding agent, 2 parts by mass or more and 20 parts by mass or less of the organic physical expanding agent may be added to 100 parts by mass of the base polymer. Also, when the expanding agent is an inorganic physical expanding agent, 0.5 parts by mass or more and 20 parts by mass or less of the inorganic physical expanding agent may be added to 100 parts by mass of the base polymer.

### <Expanding step>

In the expanding step, for example, a method of softening the expandable polymer beads in the sealed container and then releasing the expandable polymer beads into an atmosphere having a pressure lower than the pressure in the sealed container can be adopted. The expanding step can be performed as a series of steps including the crosslinking step and the expanding agent impregnation step described above. More specifically, for example, after the polymer beads are impregnated with the expanding agent while the inside of the sealed container is pressurized in the expanding agent impregnation step, the sealed container is opened, and contents of the sealed container are released under atmospheric pressure, whereby the expandable polymer beads can be expanded to obtain expanded beads.

The respective steps described above may be performed using one sealed container throughout all the steps, or may be performed replacing the sealed container for each step.

Furthermore, a second aspect of the method for producing the expanded bead includes:
a dispersion step of dispersing a polymer bead in non-foamed state in a dispersion medium in a sealed container, the polymer bead being and containing the base polymer;
a flame retardant impregnation step of impregnating the polymer bead with the brominated bisphenol-based flame retardant;
a crosslinking step of reacting the polymer bead with an organic peroxide as a crosslinking agent to crosslink the olefin-based thermoplastic elastomer;
an expanding agent impregnation step of impregnating the polymer bead with an expanding agent to prepare an expandable polymer bead; and
an expanding step of expanding the expandable polymer bead.

In the polymer beads used in the dispersion step, a value of a difference Tm_{TPO}-T_{FR} between a melting point Tm_{TPO} of the olefin-based thermoplastic elastomer and a temperature T_{FR} which is a lower one of a glass transition temperature Tg_{FR} and a melting point Tm_{FR} of the brominated bisphenol-based flame retardant is -5°C or higher and 40°C or lower. A flexural modulus of the olefin-based thermoplastic elastomer in the polymer beads used in the dispersion step is preferably 10 MPa or more and 50 MPa or less.

The second aspect of the method for producing the expanded bead is the same as the first aspect described above except that the brominated bisphenol-based flame retardant is not added in advance to the polymer beads, and that the polymer beads are impregnated with the brominated bisphenol-based flame retardant in the flame retardant impregnation step.

More specifically, the polymer beads used in the second aspect may be prepared by the same method as in the first aspect except that the brominated bisphenol-based flame retardant is not added thereto.

The flame retardant impregnation step may be performed before the olefin-based thermoplastic elastomer is crosslinked in the crosslinking step, or may be performed in parallel with the crosslinking of the olefin-based thermoplastic elastomer. From the viewpoint of more easily impregnating the polymer beads with the brominated bisphenol-based flame retardant, it is preferable to crosslink the olefin-based thermoplastic elastomer after impregnating the polymer beads with the brominated bisphenol-based flame retardant.

A timing of performing the expanding agent impregnation step is not particularly limited. For example, the expanding agent impregnation step may be performed before the flame retardant impregnation step and the crosslinking step, or the expanding agent impregnation step may be performed after the flame retardant impregnation step and the crosslinking step. The expanding agent impregnation step may be performed between the flame retardant impregnation step and the crosslinking step, or at least one of the flame retardant impregnation step and the crosslinking step may be performed in parallel with the expanding agent impregnation step.

The method of expanding the expandable polymer beads in the expanding step is the same as in the first aspect. That is, in the expanding step, for example, an aspect of softening the expandable polymer beads in the sealed container and then releasing the expandable polymer beads into an atmosphere having a pressure lower than the pressure in the sealed container can be adopted.

Since the brominated bisphenol-based flame retardant can be more reliably contained in the polymer beads to improve flame retardancy, the expanded beads are preferably produced by the production method of the first aspect.

### EXAMPLES

Hereinafter, Examples and Comparative Examples of expanded beads will be described. Note that specific aspects of the expanded beads and the method for producing the same according to the present invention are not limited to aspects of the Examples, and their configurations can be appropriately changed in the range not impairing the gist of the present invention.

Flame retardants (FR1 to FR6) used in the Examples and the Comparative Examples are shown in Table 1.

### [Table 1]

**(Table 1)**

| | Type | Manufacturer | Product Name | Tg_{FR} | Tm_{FR} | Number Average Molecular Weight |
|---|---|---|---|---|---|---|
| FR1 | Brominated Bisphenol-based | Sakamoto Yakuhin Kogyo Co., Ltd. | SR-T1000 | 87 | - | 2000 |
| FR2 | Brominated Bisphenol-based | Sakamoto Yakuhin Kogyo Co., Ltd. | SR-T2000 | 122 | - | 4000 |
| FR3 | Brominated Bisphenol-based | Sakamoto Yakuhin Kogyo Co., Ltd. | SR-T5000 | 140 | - | 10000 |
| FR4 | Brominated Bisphenol-based | Sakamoto Yakuhin Kogyo Co., Ltd. | SR-T20000 | 150 | - | 30000 |
| FR5 | Brominated Sulfone-based | SUZUHIRO CHEMICAL CO.,LTD. | FCP-65CN | - | 105 | - |
| FR6 | Brominated Bisphenol-based | DKS Co. Ltd. | SR720 | - | 115 | - |

The flame retardants FR1 to FR4 are brominated bisphenol A epoxy resins having a chemical structure represented by the following general formula (3):

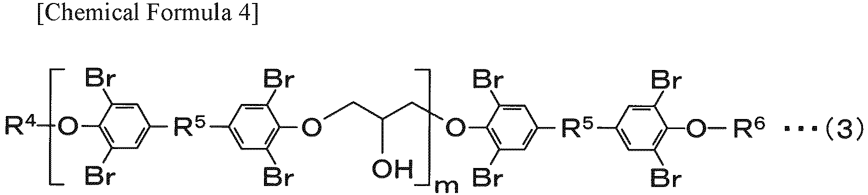

It is noted that R⁴ and R⁶ the above general formula (3) are glycidyl groups, R⁵ is a propane-2,2-diyl group, and m is an integer of 1 or more.

The flame retardant FR5 is bis[3,5-dibromo-4-(2,3-dibromopropoxy)phenyl]sulfone (the following structural formula (4)).

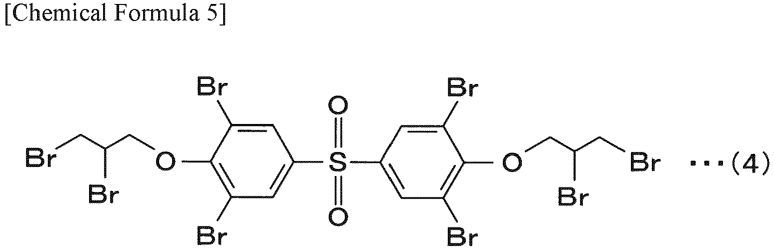

The flame retardant FR6 is 2,2-bis[4-(dibromopropoxy)-3,5-dibromophenyl]propane (the following structural formula (5)).

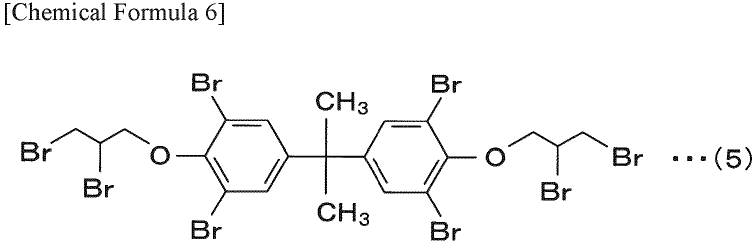

### (Examples 1, 2, 4, 5, 7 and 8, and Comparative Examples 1, 2, 4 and 5)

First, an olefin-based thermoplastic elastomer as a base polymer, a flame retardant as shown in Tables 2 and 3, a flame retardant aid, and a cell adjusting agent were supplied, and these additives and the base polymer were kneaded in an extruder. As the olefin-based thermoplastic elastomer as a raw material, specifically, a block copolymer ("INFUSE Orefin Block Copolymer (OBC) 9530" manufactured by The Dow Chemical Company, melting point: 119°C, flexural modulus: 28 MPa) of a hard segment composed of an uncrosslinked polyethylene block and a soft segment composed of an ethylene/α-olefin copolymer block was used. As the flame retardant aid, antimony trioxide (ATO) was used. As the cell adjusting agent, zinc borate ("Zinc Borate 2335" manufactured by Tomita Pharmaceutical Co., Ltd.) was used. Amounts of the flame retardant and the flame retardant aid to be contained were set to ratios as shown in Tables 2 and 3 with respect to 100 parts by mass of the base polymer, and an amount of zinc borate to be contained was set to 1000 ppm by mass with respect to the base polymer.

The polymer composition was extruded from an extruder into a strand shape which was then cooled with water to obtain a single-layered strand. A diameter of the strand is about 2 mm. The obtained strand was cut using a pelletizer to obtain single-layered polymer beads.

In this example, the dispersion step, the crosslinking step, the expanding agent impregnation step, and the expanding step were performed as a series of steps using one sealed container.

### <Dispersion step>

One (1) kg of the polymer beads described above and a crosslinking agent in an amount as shown in Tables 2 and 3 were enclosed in the sealed container together with 3 L of water as a dispersion medium. Next, contents of the container were stirred to disperse the polymer beads in the dispersion medium. In this example, kaolin was used as a dispersant, and an organic peroxide (NOF CORPORATION "PERCUMYL-D", one-hour half-life temperature T₁ₕ: 135.7°C) was used as the crosslinking agent.

### <Crosslinking step and expanding agent impregnation step>

In this example, the polymer beads were impregnated with an organic peroxide as the crosslinking agent, and then impregnation of the polymer beads with an expanding agent and crosslinking of the olefin-based thermoplastic elastomer were performed in parallel. Specifically, first, the inside of the sealed container was heated while being stirred, so that a temperature inside the container was set to 110°C. This temperature was retained for 30 minutes, so that the polymer beads were impregnated with the organic peroxide. Next, the inside of the sealed container was heated to 160°C, which was the crosslinking temperature T_{CL}, and carbon dioxide as the expanding agent was further supplied until the pressure in the container reached a value indicated in the "Initial expanding agent amount" column in Tables 2 and 3 in terms of gauge pressure, and retained for 30 minutes. Thus, the organic peroxide was reacted to crosslink the olefin-based thermoplastic elastomer, and the polymer beads were impregnated with the expanding agent.

### <Expanding step>

In the expanding step, the sealed container was opened, and the contents thereof were released under atmospheric pressure to expand the expandable polymer beads. The pressure (vapor pressure) in the container at this time was as shown in Tables 2 and 3. As described above, expanded beads containing the crosslinked olefin-based thermoplastic elastomer and the flame retardant were obtained.

### (Examples 3 and 6)

Examples 3 and 6 are examples in which the apparent density of the expanded beads was further reduced by performing a second expanding step after performing the expanding step. In this example, first, expandable polymer beads were expanded in the same manner as in Example 1 to obtain first-step expanded beads.

In the second expanding step, the first-step expanded beads were dried at a temperature of 23°C for 24 hours, and then the first-step expanded beads were filled in a pressure-resistant container. Air as an inorganic gas was injected into the pressure-resistant container to impregnate the inorganic gas into cells of the first-step expanded beads. In this example, the inorganic gas was impregnated into the bubbles of the first-step expanded beads so that the pressure in the bubbles of the first-step expanded beads was a value as shown in Table 2.

Next, the first-step expanded beads taken out from the pressure-resistant container were heated with steam at a pressure (gauge pressure) as shown in Table 2 under atmospheric pressure to expand bubbles of the first-step expanded beads. As described above, two-step expanded beads were obtained.

### (Example 9)

Example 9 is an example of expanded beads having a multilayer structure including a core layer in a foamed state and a covering layer covering the core layer. In this example, strands were prepared using a co-extruder having the following structure. That is, the co-extruder is provided with a core layer forming extruder having an inner diameter of 65 mm and a covering layer forming extruder having an inner diameter of 30 mm. In addition, the co-extruder is provided with a die capable of co-extruding a large number of multilayer strands on an outlet side thereof.

An olefin-based thermoplastic elastomer as a base polymer, a flame retardant as shown in Table 2, a flame retardant aid, and a cell adjusting agent were supplied to the core layer forming extruder, and these additives and the base polymer were kneaded in the extruder. The olefin-based thermoplastic elastomer, the flame retardant aid, and the bubble regulator used in the core layer forming extruder are the same as those in Example 1.

In addition, only the same olefin-based thermoplastic elastomer as that of the core layer was supplied to the covering layer forming extruder.

Thereafter, a melt-kneaded product was co-extruded from each extruder so that a mass ratio of the covering layer was a value as shown in Table 2 when a total of the core layer and the covering layer was 100%. The melt-kneaded products extruded from the extruders join in the die, and are extruded from pores of cap attached to tips of the extruders into a multilayer strand shape in which an outer periphery of the core layer is covered with the covering layer. This co-extrudate was cooled with water to obtain a multilayer strand. A diameter of the strand is about 2 mm.

The obtained strand was cut using a pelletizer so as to have a mass of about 5 mg. As a result, polymer beads, in a non-foamed state, including a core layer containing a base polymer and a flame retardant, and a covering layer, which covers a side peripheral surface of the core layer, composed of an olefin-based thermoplastic elastomer were obtained. An amount of the flame retardant to be contained in the polymer beads of this example is 31 parts by mass with respect to 100 parts by mass of the base polymer of the core layer, and is 29 parts by mass with respect to a total, 100 parts by mass, of the base polymer of the core layer and the olefin-based thermoplastic elastomer of the covering layer. An amount of the flame retardant aid to be contained in the polymer beads of this example is 9.5 parts by mass with respect to 100 parts by mass of the base polymer of the core layer, and is 9 parts by mass with respect to a total, 100 parts by mass, of the base polymer of the core layer and the olefin-based thermoplastic elastomer of the covering layer.

Thereafter, the core layer was expanded by performing the dispersion step, the crosslinking step, the expanding agent impregnation step, and the expanding step in the same manner as in Example 1. As described above, expanded beads having a multilayer structure including a core layer, in a foamed state, containing a base polymer and a flame retardant and a covering layer, in a non-foamed state, containing an olefin-based thermoplastic elastomer and covering a surface of the core layer were obtained.

### (Comparative Example 3)

Comparative Example 3 is an example of expanded beads containing no flame retardant. In this example, polymer beads were prepared by the same method as in Example 1 except that the flame retardant was not supplied to the extruder. Thereafter, expanded beads having a single layer structure containing a base polymer and not containing a flame retardant were obtained by performing the dispersion step, the crosslinking step, the expanding agent impregnation step, and the expanding step in the same manner as in Example 1.

Using the expanded beads obtained as described above, the apparent density, bulk density, and xylene insoluble content were measured. Furthermore, a molded article density, moldability during in-mold molding, and flame retardancy of the expanded bead molded article obtained by in-mold molding of the expanded beads were evaluated. Specific methods for measuring and evaluating these characteristics are as follows.

### <Apparent density of expanded bead>

The apparent density of the expanded beads was determined as follows. Expanded beads were allowed to stand for 2 days under conditions of a relative humidity of 50%, a temperature of 23°C, and 1 atm. Next, a measuring cylinder containing water having a temperature of 23°C was prepared, and expanded beads having a mass W [g] were immersed in water in the measuring cylinder using a wire net or the like. Then, a volume V [L] of the expanded beads read from a water level rise was measured. The apparent density of the expanded beads was determined by converting the unit of the value W/V [g/L] obtained by dividing the mass W [g] of the expanded beads put in the measuring cylinder by the volume V [L] into [kg/m³]. The apparent density of each expanded bead was as shown in Tables 2 and 3.

### <Bulk density of expanded bead>

Expanded beads were allowed to stand for 2 days under conditions of a relative humidity of 50%, a temperature of 23°C, and 1 atm. The expanded beads were then filled up to a marked line of 1 L so as to be naturally deposited in a measuring flask having a volume of 1 L. Then, the mass [g] of the expanded beads in the measuring flask was measured. The mass of the expanded beads in the measuring flask was subjected to unit conversion to obtain the bulk density [kg/m³] of the expanded beads. The bulk density of each expanded bead was as shown in Tables 2 and 3.

### <Xylene insoluble content of expanded bead>

A mass of expanded beads of about 1.0 g was measured, and this value was defined as a mass W1 before extraction. The above-described expanded beads were then placed in a 150-ml round bottom flask and about 200 ml of xylene is added. The round bottom flask was heated with a mantle heater for reflux for 6 hours, and then a residue remaining undissolved was filtered with a 100-mesh wire net to be separated. The obtained residue was dried in a vacuum dryer at 80°C for 8 hours, and then a mass W2 of a dried product was measured. Then, a mass percentage [(W2/W1) × 100] (%) of the mass W2 of the dried product to the mass W1 before extraction was defined as a xylene insoluble content (mass%). The xylene insoluble content of each expanded bead was as shown in Tables 2 and 3.

### <Shape (appearance) of expanded bead>

First, for 100 randomly selected expanded beads, a maximum length (L) of the expanded beads and a minimum diameter (D) of a cross section of a central part in the length direction of a maximum length L of the beads were measured with a caliper, and a ratio (L/D) was calculated. A value obtained by arithmetically averaging the obtained (L/D) value was defined as an aspect ratio of the expanded beads. When the aspect ratio of the expanded beads was 1.5 or less, the expanded beads were determined to be spherical; when the aspect ratio was more than 1.5 and 5.0 or less, the expanded beads were determined to be elliptical; and when the aspect ratio was more than 5.0, the expanded beads were determined to be flat. The lower limit on the aspect ratio of the expanded beads is approximately 1.

In the evaluation of the shape of the expanded beads, a case where the shape of the expanded beads was spherical was decided as acceptable because of a good appearance.

### <Molded article density>

First, expanded beads were filled in a mold capable of molding a rectangular parallelepiped having a length of 250 mm, a width of 250 mm, and a thickness of 50 mm. In this mold, steam having a gauge pressure of 0.16 MPa (G) was supplied into the mold to perform in-mold molding, thereby obtaining a rectangular parallelepiped expanded bead molded article. Thereafter, the expanded bead molded article taken out from the mold was placed in an oven at 60°C, and curing and drying of the expanded bead molded article were performed. The mass of the expanded bead molded article taken out from the oven was divided by the volume determined from the outer dimension of the expanded bead molded article, and the unit of the obtained value was converted into [kg/m³] to calculate the molded article density. The molded article density of each expanded bead molded article was as shown in Tables 2 and 3.

### <Moldability>

In the evaluation of moldability, first, a rectangular parallelepiped expanded bead molded article was prepared by the same method as the method for preparing an expanded bead molded article used to measure the molded article density. Then, using the obtained expanded bead molded article, the surface properties, fusibility, and molding recoverability were evaluated by the following methods.

### · Surface property (gap)

A 100 mm × 100 mm square was drawn at the central part of one skin surface in the thickness direction of the expanded bead molded article, and then a diagonal line was drawn from any one corner of the square. Then, a number of voids existing on the diagonal line, that is, voids having a size of a length of 1 mm × a width of 1 mm or more, among gaps formed between the expanded beads, was counted. In the "Surface property" column in Tables 2 and 3, the symbol "A" is shown when the number of voids was less than 3. In this column, the symbol "B" is shown when the number of voids was 3 or more. In the evaluation of the surface property, the case of the symbol "A" representing that the number of voids was less than 3 was decided as acceptable because of excellent surface property, and the case of the symbol "B" representing that the number of voids was 3 or more was decided as unacceptable because of poor surface property.

### · Fusibility

The expanded bead molded article was bent so as to be substantially equally divided in the length direction to break the molded article. Thereafter, a fracture surface of the test piece was observed, and the number of expanded beads in which the expanded beads themselves had fractured (material destruction) and the number of expanded beads peeled off between the interfaces of the expanded beads were each visually measured. Next, a proportion of the number of expanded beads in which the expanded beads themselves had fractured to the total of the number of expanded beads in which the expanded beads themselves had fractured and the number of expanded beads peeled off between the interfaces was calculated, and the proportion was expressed as percentage and defined as a fusion rate (%). The fusion rate between the expanded beads in the expanded bead molded article was as shown in Tables 2 and 3. **In** the evaluation of the fusion rate, a case where the fusion rate was 60% or more was decided as acceptable, and a case where the fusion rate was less than 60% was decided as unacceptable.

### · Molding recoverability

The thickness at a position 10 mm inward from the outer peripheral edge and the thickness at the center in a plan view of the expanded bead molded article as viewed from the thickness direction were measured. In the "Molding recoverability" column in Tables 2 and 3, the symbol "A" is shown when a thickness ratio, that is, a value obtained by expressing the ratio of the latter value to the former value in percentage was 90% or more, and the symbol "B" is shown when the thickness ratio was less than 90%. In the evaluation of molding recoverability, the case of the symbol "A" representing a thickness ratio of 90% or more was decided as acceptable because of excellent recoverability after in-mold molding, and the case of the symbol" B " representing a thickness ratio of less than 90% was decided as unacceptable because of insufficient recoverability after in-mold molding.

### <Flame retardancy>

The flame retardancy of the expanded bead molded article was evaluated based on results of a horizontal combustion test in accordance with the UL94 standard and results of a combustibility test in accordance with JIS A 9521:2014. The results of the respective tests are shown in the "Flame retardancy" column in Tables 2 and 3. A specific test method for each test is as follows.

### · UL94 standard horizontal combustion test

Five (5) test pieces having a length of 150 mm × a width of 50 mm × a thickness of 13 mm and having no skin surface were cut out from the expanded bead molded article. Then marked lines were drawn at positions having distances of 25 mm, 60 mm, and 125 mm from one end in the longitudinal direction on a surface having a length of 150 mm × a width of 50 mm of each of the test pieces. The test piece was allowed to stand at a temperature of 23°C and a humidity of 50% RH for 24 hours for condition adjustment, then the test piece was placed on a wire net with the mark line facing upward, and cotton was placed under the test piece. Thereafter, a burner with a blade end was adjusted so that a blue flame of 38 mm ± 1 mm came out from the burner, and the flame was applied to an end of the test piece. After 1 minute, the burner was located away from the test piece by 100 mm or more, and time and distance until the flame disappeared from the test piece were measured.

In the evaluation of the flame retardancy based on the UL94 horizontal combustion test, the class of flame retardancy was decided as follows based on the time and distance until the flame disappeared from the test piece. The flame retardancy classes of the Examples and the Comparative Examples are shown in the "UL94 horizontal combustion test" column in Tables 2 and 3.

HF-1: All the following conditions are satisfied: a flame-out time at a position where a distance from an end part hit by the flame is 4/5 of the longitudinal dimension of the test piece is 2 seconds or less, a flame-out time at a position where the distance from the end part hit by the flame is 1/5 of the longitudinal dimension of the test piece is 10 seconds or less, a combustion glowing time of the test piece is 30 seconds or less, cotton is not combusted, and a combustion distance is 60 mm or less.

HF-2: The same conditions as those of HF-1 are satisfied except that cotton is combusted.

HBF: Any of the following conditions is satisfied: a combustion speed from the marked line at a distance of 25 mm from the end part hit by the flame to the marked line at a distance of 125 mm therefrom is within 40 mm/min, or combustion stops between the marked line at 25 mm and the marked line at 125 mm.

### · JIS A 9521:2014 (combustibility: measurement method A)

From the expanded bead molded article, 5 test pieces having a length of 200 mm × a width of 25 mm × a thickness of 10 mm and having no skin surface were cut out, and an ignition limit indication line and a combustion limit indication line were attached to the respective test pieces. The flame of a candle was moved to the ignition limit indication line at a constant speed over about 5 seconds from a tip while the test piece was tilted by 45° from the horizontal, and the flame was quickly retracted when the flame reached the ignition limit indication line. Then, a time from a moment when the flame reached the ignition limit indication line until the flame disappeared was measured, and presence or absence of afterglow and a combustion stop position were confirmed.

In the flame retardancy evaluation based on JIS A 9521:2014, a case where both of the conditions were satisfied: the flame did not reach the combustion limit indication line and an average of the flame-out times (average extinction time) of the 5 test pieces was within 3.0 s was decided as self-extinction. In the "JIS A 9521 combustibility test" column in Tables 2 and 3, the symbol "A" is shown in the case which was decided as self-extinction, and the symbol "B" is shown in the case which was not decided as self-extinction.

### [Table 2]

**(Table 2)**

| | | | Example 1 | Example 2 | Example 3 | Example 4 | Example 5 | Example 6 | Example 7 | Example 8 | Example 9 |
|---|---|---|---|---|---|---|---|---|---|---|---|
| Base Polymer | Melting Point Tm_{TPO} | °C | 119 | 119 | 119 | 119 | 119 | 119 | 119 | 119 | 119 |
| Flame Retardant | Type | - | FR1 | FR1 | FR1 | FR1 | FR1 | FR1 | FR1 | FR2 | FR1 |
| | T_{FR} | °C | 87 | 87 | 87 | 87 | 87 | 87 | 87 | 122 | 87 |
| | Tm_{TPO}-T_{FR} | °C | 32 | 32 | 32 | 32 | 32 | 32 | 32 | -3 | 32 |
| | Contained Amount | parts by mass | 11.9 | 19.5 | 19.5 | 5.4 | 5.3 | 5.4 | 5.4 | 11.9 | 31.0 |
| Flame Retardant Aid | Type | | ATO | ATO | ATO | ATO | - | ATO | ATO | ATO | ATO |
| | Contained Amount | parts by mass | 4.0 | 6.5 | 6.5 | 1.8 | - | 1.8 | 1.8 | 4.0 | 9.5 |
| Covering Layer | Composition | - | - | - | - | - | - | - | - | - | TPO |
| | Mass Ratio | mass% | - | - | - | - | - | - | - | - | 5 |
| Crosslinking Agent | Added Amount (mass) | g | 8.0 | 8.0 | 8.0 | 8.0 | 8.0 | 8.0 | 8.0 | 8.0 | 7.5 |
| | Added Amount (mass ratio) | phr | 0.80 | 0.80 | 0.80 | 0.80 | 0.80 | 0.80 | 0.80 | 0.80 | 0.75 |
| | Crosslinking Temperature T_{CL} | °C | 160 | 160 | 160 | 160 | 160 | 160 | 160 | 160 | 160 |
| Expanding Agent | Type | - | CO₂ | CO₂ | CO₂ | CO₂ | CO₂ | CO₂ | CO₂ | CO₂ | CO₂ |
| | Initial Expanding Agent Amount | MPa(G) | 1.0 | 1.0 | 1.0 | 1.0 | 1.0 | 1.0 | 1.0 | 1.0 | 1.0 |
| | Expanding Temperature | °C | 160 | 160 | 160 | 160 | 160 | 160 | 160 | 160 | 160 |
| | Vapor Pressure | MPa(G) | 3.8 | 3.8 | 3.8 | 3.8 | 3.8 | 3.8 | 3.1 | 3.8 | 3.8 |
| Second Expanding | Pressure in Cell | MPa | - | - | 0.5 | - | - | 0.5 | - | - | - |
| | Steam Pressure | MPa(G) | - | - | 0.04 | - | - | 0.04 | - | - | - |
| Crosslinked Expanded Bead | Bulk Density | kg/m³ | 66 | 78 | 43 | 59 | 54 | 51 | 79 | 69 | 83 |
| | Apparent Density | kg/m³ | 105 | 125 | 69 | 95 | 87 | 84 | 127 | 110 | 132 |
| | Xylene Insoluble Content | mass% | 59.4 | 58.8 | 58.8 | 52.0 | 49.2 | 49.8 | 53.2 | 40.7 | 56.5 |
| | Shape | - | Spherical | Spherical | Spherical | Spherical | Spherical | Spherical | Spherical | Spherical | Spherical |
| Expanded Bead Molded Article | Molded Article Density | kg/m³ | 69 | 75 | 32 | 56 | 56 | 35 | 87 | 49 | 73 |
| Moldability | Surface Properties | - | A | A | A | A | A | A | A | A | A |
| | Fusion Rate | % | 100 | 80 | 100 | 100 | 100 | 100 | 80 | 80 | 100 |
| | Molding Recoverability | - | A | A | A | A | A | A | A | A | A |
| Flame Retardancy | UL94 Horizontal Combustion Test | - | HF-1 | HF-1 | HF-1 | HF-2 | HF-2 | HF-1 | HF-2 | HF-1 | HF-1 |
| | JIS A 9521 Combustibility Test | - | B | B | A | B | B | B | B | B | A |

### [Table 3]

**(Table 3)**

| | | | Comparative Example 1 | Comparative Example 2 | Comparative Example 3 | Comparative Example 4 | Comparative Example 5 |
|---|---|---|---|---|---|---|---|
| Base Polymer | **Melting Point Tm_{TPO}** | °C | 119 | 119 | 119 | 119 | 119 |
| Flame Retardant | Type | - | FR3 | FR4 | - | FR5 | FR6 |
| | T_{FR} | °C | 140 | 150 | - | 105 | 115 |
| | Tm_{TPO}-T_{FR} | °C | -21 | -31 | - | 14 | 4 |
| | Contained Amount | parts by mass | 11.9 | 11.9 | - | 5.4 | 5.4 |
| Flame Retardant Aid | Type | | ATO | ATO | - | ATO | ATO |
| | Contained Amount | parts by mass | 4.0 | 4.0 | - | 1.7 | 1.7 |
| Covering Layer | Composition | - | - | - | - | - | - |
| | Mass Ratio | mass% | - | - | - | - | - |
| Crosslinking Agent | Added Amount (mass) | g | 8.0 | 7.0 | 8.0 | 8.0 | 8.0 |
| | Added Amount (mass ratio) | phr | 0.80 | 0.70 | 0.80 | 0.80 | 0.80 |
| | **Crosslinking Temperature T_{CL}** | °C | 160 | 160 | 160 | 160 | 160 |
| Expanding Agent | Type | - | CO₂ | CO₂ | CO₂ | CO2 | CO2 |
| | Initial Expanding Agent Amount | MPa(G) | 1.0 | 1.0 | 1.0 | 1.0 | 1.0 |
| | Expanding Temperature | °C | 160 | 160 | 160 | 160 | 160 |
| | Vapor Pressure | MPa(G) | 3.8 | 3.8 | 4.0 | 3.8 | 3.8 |
| Second Expanding | Pressure in Cell | MPa | - | - | - | - | - |
| | Steam Pressure | MPa(G) | - | - | - | - | - |
| rosslinked Expanded Be | Bulk Density | kg/m³ | 56 | 69 | 50 | - | - |
| | Apparent Density | kg/m³ | 90 | 110 | 80 | - | - |
| | Xylene Insoluble Content | mass% | 47.5 | 40.7 | 49.3 | - | - |
| | Shape | - | Spherical | Flat | Spherical | - | - |
| Expanded Bead Molded Article | Molded Article Density | kg/m³ | 50 | - | 57 | - | - |
| Moldability | Surface Properties | - | A | - | A | - | - |
| | Fusion Rate | % | 20 | - | 100 | - | - |
| | Molding Recoverability | - | A | - | A | - | - |
| Flame Retardancy | UL94 Horizontal Combustion Test | - | HF-1 | - | HBF | - | - |
| | JIS A 9521 Combustibility Test | - | B | - | B | - | - |

As shown in Table 2 and 3, the expanded beads of Example 1 to 9 contain an olefin-based thermoplastic elastomer and the specific brominated bisphenol-based flame retardant. In these expanded beads, the value of the difference Tm_{TPO-}T_{FR} between the melting point Tm_{TPO} of the olefin-based thermoplastic elastomer used as a raw material and the T_{FR} of the brominated bisphenol-based flame retardant is within the above specific range. Therefore, the expanded beads of Examples 1 to 9 were excellent in expandability and exhibited a spherical appearance. These crosslinked expanded beads exhibited excellent flame retardancy and fusibility.

In addition, the expanded beads of Example 3 and Example 9 were particularly excellent in flame retardancy among Examples 1 to 9, and could pass the combustibility test in accordance with JIS A 9521: 2014. The reason for this is considered as follows.

That is, the expanded beads of Example 3 has a relatively large amount of the brominated bisphenol-based flame retardant to be contained, among the expanded beads having a single layer structure. Furthermore, in Example 3, since the second expanding step was performed, the apparent density was lower than that of the expanded beads which were not subjected to the second expanding step. As a result, the total mass of flammable substances in the expanded beads is smaller than that of other expanded beads. As a result, it is presumed that the expanded bead molded article composed of the expanded beads of Example 3 exhibited particularly excellent flame retardancy.

The expanded beads of Example 9 have a multilayer structure including a core layer containing a large amount of the brominated bisphenol-based flame retardant and a covering layer containing no brominated bisphenol-based flame retardant. Therefore, the expanded beads of Example 9 can ensure excellent flame retardancy in the core layer. Further, by adopting the multilayer structure as in Example 9, the amount of the brominated bisphenol-based flame retardant to be contained in the covering layer can be set to a value different from the amount of the brominated bisphenol-based flame retardant to be contained in the core layer. Therefore, a large amount of the brominated bisphenol-based flame retardant is contained in the core layer to enhance the flame retardancy, and, at the same time, excellent fusibility can be secured in the covering layer, and a good expanded bead molded article can be obtained.

The expanded beads of Comparative Example 1 are an example in which the glass transition temperature Tg_{FR} of the flame retardant is excessively higher than the melting point Tm_{TPO} of the olefin-based thermoplastic elastomer used as a raw material, and the value of Tm_{TPO}-T_{FR} does not satisfy the range of -5°C or higher and 40°C or lower. In Comparative Example 1, the fusibility between the expanded beads was reduced.

The expanded beads of Comparative Example 2 are an example in which the glass transition temperature Tg_{FR} of the flame retardant is higher than that of Comparative Example 1. In the process of producing the expanded beads of Comparative Example 2, the viscosity of the molten polymer beads increased, leading to deterioration in expandability. As a result, the obtained expanded beads had a flat shape, and were not suitable for in-mold molding.

The expanded beads of Comparative Example 3 did not contain a flame retardant or a flame retardant aid, and thus were inferior in flame retardancy to those of Examples 1 to 9.

In Comparative Examples 4 and 5, the crosslinking reaction of the olefin-based thermoplastic elastomer was inhibited by the flame retardant, leading to an insufficient crosslinking of the olefin-based thermoplastic elastomer. As a result, in Comparative Examples 4 and 5, expanded beads could not be obtained. The polymer beads obtained in Comparative Examples 4 and 5 were discolored granules. The discoloration of the polymer beads is considered to be caused by the reaction between the flame retardant and the peroxide radicals.

## Claims

1. A crosslinked olefin-based thermoplastic elastomer expanded bead comprising:
a base polymer containing an olefin-based thermoplastic elastomer; and
a brominated bisphenol-based flame retardant having a chemical structure represented by the following general formula (1),
wherein a value of a difference Tm_{TPO}-T_{FR} between a melting point Tm_{TPO} of the olefin-based thermoplastic elastomer as measured based on a plastic transition temperature measurement method defined in JIS K 7121-1987 and a temperature T_{FR} which is a lower one of a glass transition temperature Tg_{FR} as measured by heat flux differential scanning calorimetry described in JIS K 7121-1987 and a melting point Tm_{FR} of the brominated bisphenol-based flame retardant as measured based on the plastic transition temperature measurement method defined in JIS K 7121-1987 is -5°C or higher and 40°C or lower, and
wherein a xylene insoluble content measured in accordance with the description is 5 mass% or more and 80 mass% or less: 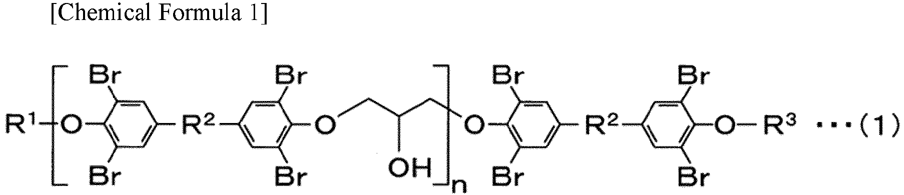
wherein, in the general formula (1), R¹ and R³ are monovalent substituents, R² is a divalent substituent, and n is an integer of 1 or more and 6 or less.

2. The crosslinked olefin-based thermoplastic elastomer expanded bead according to claim 1, wherein, in the general formula (1), R¹ and R³ are glycidyl groups, and R² is a propane-2,2-diyl group.

3. The crosslinked olefin-based thermoplastic elastomer expanded bead according to claim 1 or 2, wherein an amount of the brominated bisphenol-based flame retardant to be contained is 3 parts by mass or more and 35 parts by mass or less with respect to 100 parts by mass of the base polymer.

4. The crosslinked olefin-based thermoplastic elastomer expanded bead according to any one of claims 1 to 3, wherein the glass transition temperature Tg_{FR} of the brominated bisphenol-based flame retardant is 80°C or higher and 130°C or lower.

5. The crosslinked olefin-based thermoplastic elastomer expanded bead according to any one of claims 1 to 4, wherein the brominated bisphenol-based flame retardant has a number average molecular weight of 1500 or more and 5000 or less as measured by the GPC method.

6. The crosslinked olefin-based thermoplastic elastomer expanded bead according to any one of claims 1 to 5, wherein the olefin-based thermoplastic elastomer is a block copolymer including a hard segment composed of a polyethylene block and a soft segment composed of an ethylene/α-olefin copolymer block.

7. The crosslinked olefin-based thermoplastic elastomer expanded bead according to any one of claims 1 to 6, wherein the olefin-based thermoplastic elastomer has a flexural modulus of 10 MPa or more and 50 MPa or less as determined by measurement in accordance with a measurement method described in JIS K 7171:2008.

8. A method for producing the crosslinked olefin-based thermoplastic elastomer expanded bead according to any one of claims 1 to 7, the method comprising:
a dispersion step of dispersing a polymer bead in non-foamed state in a dispersion medium in a sealed container, the polymer bead containing the base polymer and the brominated bisphenol-based flame retardant;
a crosslinking step of reacting the polymer beads with an organic peroxide as a crosslinking agent to crosslink the olefin-based thermoplastic elastomer;
an expanding agent impregnation step of impregnating the polymer bead with an expanding agent to prepare an expandable polymer bead; and
an expanding step of expanding the expandable polymer bead.

9. The method for producing the crosslinked olefin-based thermoplastic elastomer expanded bead according to claim 8, wherein a crosslinking temperature T_{CL} between the crosslinking agent and the olefin-based thermoplastic elastomer in the crosslinking step is higher than the temperature T_{FR} + 30°C, the temperature T_{FR} being a lower one of the glass transition temperature Tg_{FR} and the melting point Tm_{FR} of the brominated bisphenol-based flame retardant.

## Patentansprüche

1. Vernetztes olefinbasiertes thermoplastisches expandiertes Elastomerkügelchen mit:
einem Basispolymer, das ein olefinbasiertes thermoplastisches Elastomer enthält; und
einem bromierten bisphenolbasierten Flammschutzmittel mit einer chemischen Struktur, die durch die folgende allgemeine Formel (1) dargestellt wird,
bei dem ein Wert einer Differenz Tm_{TPO}-T_{FR} zwischen einem Schmelzpunkt Tm_{TPO} des olefinbasierten thermoplastischen Elastomers, wie basierend auf einem plastischen Übergangstemperaturmessverfahren, das in JIS K 7121-1987 definiert ist, gemessen, und einer Temperatur T_{FR}, die eine niedrigere einer Glasübergangstemperatur Tg_{FR}, wie durch Wärmeflussdifferenzialkalorimetrie, die in JIS K 7121-1987 beschrieben wird, gemessen, und eines Schmelzpunkts Tm_{FR} des bromierten bisphenolbasierten Flammschutzmittels, wie basierend auf dem plastischen Übergangstemperaturmessverfahren, das in JIS K 7121-1987 definiert ist, gemessen, ist, -5°C oder höher und 40°C oder niedriger ist, und
bei dem ein in Xylol unlöslicher Gehalt, der gemäß der Beschreibung gemessen wird,
5 Masse% oder mehr und 80 Masse% oder weniger beträgt: 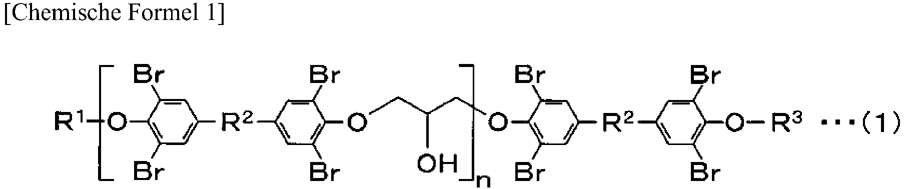
bei dem, in der allgemeinen Formel (1), R¹ und R³ monovalente Substituenten sind, R² ein divalenter Substituent ist, und n eine ganze Zahl von 1 oder mehr und 6 oder weniger ist.

2. Vernetztes olefinbasiertes thermoplastisches expandiertes Elastomerkügelchen nach Anspruch 1, bei dem, in der allgemeinen Formel (1), R¹ und R³ Glycidyl-Gruppen sind, und R² eine Propan-2,2-Diyl-Gruppe ist.

3. Vernetztes olefinbasiertes thermoplastisches expandiertes Elastomerkügelchen nach Anspruch 1 oder 2, bei dem eine Menge des bromierten bisphenolbasierten Flammschutzmittels, das enthalten sein soll, 3 Teile nach Masse oder mehr und 35 Teile nach Masse oder weniger in Bezug auf 100 Teile nach Masse des Basispolymers beträgt.

4. Vernetztes olefinbasiertes thermoplastisches expandiertes Elastomerkügelchen nach einem der Ansprüche 1 bis 3, bei dem die Glasübergangstemperatur Tg_{FR} des bromierten bisphenolbasierten Flammschutzmittels 80°C oder höher und 130°C oder niedriger ist.

5. Vernetztes olefinbasiertes thermoplastisches expandiertes Elastomerkügelchen nach einem der Ansprüche 1 bis 4, bei dem das bromierte bisphenolbasierte Flammschutzmittel ein zahlenmittleres Molekulargewicht von 1500 oder mehr und 5000 oder weniger, wie durch das GPC-Verfahren gemessen, aufweist.

6. Vernetztes olefinbasiertes thermoplastisches expandiertes Elastomerkügelchen nach einem der Ansprüche 1 bis 5, bei dem das olefinbasierte thermoplastische Elastomer ein Block-Copolymer mit einem harten Segment, das aus einem Polyethylen-Block besteht, und einem weichen Segment, das aus einem Ethylen/α-Olefin-Copolymer-Block besteht, ist.

7. Vernetztes olefinbasiertes thermoplastisches expandiertes Elastomerkügelchen nach einem der Ansprüche 1 bis 6, bei dem das olefinbasierte thermoplastische Elastomer einen Biegemodul von 10 MPa oder mehr und 50 MPa oder weniger, wie durch Messung gemäß einem Messverfahren, das in JIS K 7171:2008 beschrieben wird, bestimmt, aufweist.

8. Verfahren zum Produzieren des vernetzten olefinbasierten thermoplastischen expandierten Elastomerkügelchens nach einem der Ansprüche 1 bis 7, umfassend:
einen Dispersionsschritt zum Dispergieren eines Polymerkügelchens in nicht geschäumtem Zustand in einem Dispersionsmedium in einem abgedichteten Behälter, welches Polymerkügelchen das Basispolymer und das bromierte bisphenolbasierte Flammschutzmittel enthält;
einen Vernetzungsschritt zum Reagieren der Polymerkügelchen mit einem organischen Peroxid als ein Vernetzungsmittel zum Vernetzen des olefinbasierten thermoplastischen Elastomers;
einen Expansionsmittelimprägnationsschritt zum Imprägnieren des Polymerkügelchens mit einem Expansionsmittel zum Vorbereiten eines expandierbaren Polymerkügelchens; und
einen Expansionsschritt zum Expandieren des expandierbaren Polymerkügelchens.

9. Verfahren zum Produzieren des vernetzten olefinbasierten thermoplastischen expandierten Elastomerkügelchens nach Anspruch 8, bei dem eine Vernetzungstemperatur T_{CL} zwischen dem Vernetzungsmittel und dem olefinbasierten thermoplastischen Elastomer in dem Vernetzungsschritt höher als die Temperatur T_{FR} + 30°C ist, welche Temperatur T_{FR} eine niedrigere der Glasübergangstemperatur Tg_{FR} und des Schmelzpunkts Tm_{FR} des bromierten bisphenolbasierten Flammschutzmittels ist.

## Revendications

1. Perle expansée en élastomère thermoplastique à base d'oléfine réticulé comprenant :
un polymère de base contenant un élastomère thermoplastique à base d'oléfine ; et
un retardateur de flamme à base de bisphénol bromé ayant une structure chimique représentée par la formule générale (1) suivante,
dans laquelle une valeur d'une différence Tm_{TPO}-T_{FR} entre un point de fusion Tm_{TPO} de l'élastomère thermoplastique à base d'oléfine tel que mesuré sur la base d'une méthode de mesure de la température de transition des plastiques définie dans la norme JIS K 7121-1987, et une température T_{FR} qui est la plus basse parmi une température de transition vitreuse Tg_{FR} telle que mesurée par calorimétrie différentielle à balayage à flux de chaleur décrite dans la norme JIS K 7121-1987 et un point de fusion Tm_{FR} du retardateur de flamme à base de bisphénol bromé tel que mesuré sur la base de la méthode de mesure de la température de transition des plastiques définie dans la norme JIS K 7121-1987, est de -5 °C ou plus et de 40 °C ou moins, et
dans laquelle une teneur en matières insolubles dans le xylène mesurée conformément à la description est de 5 % en masse ou plus et de 80 % en masse ou moins : 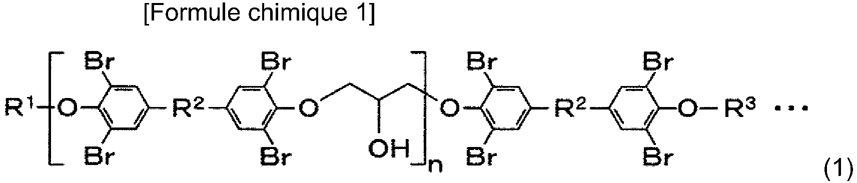
dans laquelle, dans la formule générale (1), R¹ et R³ sont des substituants monovalents, R² est un substituant divalent, et n est un entier de 1 ou plus et de 6 ou moins.

2. La perle expansée en élastomère thermoplastique à base d'oléfine réticulé selon la revendication 1, dans laquelle, dans la formule générale (1), R¹ et R³ sont des groupes glycidyle, et R² est un groupe propane-2,2-diyle.

3. La perle expansée en élastomère thermoplastique à base d'oléfine réticulé selon la revendication 1 ou 2, dans laquelle une quantité du retardateur de flamme à base de bisphénol bromé devant être contenue est de 3 parties en masse ou plus et de 35 parties en masse ou moins pour 100 parties en masse du polymère de base.

4. La perle expansée en élastomère thermoplastique à base d'oléfine réticulé selon l'une quelconque des revendications 1 à 3, dans laquelle la température de transition vitreuse Tg_{FR} du retardateur de flamme à base de bisphénol bromé est de 80 °C ou plus et de 130 °C ou moins.

5. La perle expansée en élastomère thermoplastique à base d'oléfine réticulé selon l'une quelconque des revendications 1 à 4, dans laquelle le retardateur de flamme à base de bisphénol bromé a un poids moléculaire moyen en nombre de 1500 ou plus et de 5000 ou moins tel que mesuré par la méthode de chromatographie par perméation de gel, anglais : *gel permeation chromatography,* GPC.

6. La perle expansée en élastomère thermoplastique à base d'oléfine réticulé selon l'une quelconque des revendications 1 à 5, dans laquelle l'élastomère thermoplastique à base d'oléfine est un copolymère à blocs comprenant un segment dur composé d'un bloc de polyéthylène et un segment souple composé d'un bloc de copolymère d'éthylène/α-oléfine.

7. La perle expansée en élastomère thermoplastique à base d'oléfine réticulé selon l'une quelconque des revendications 1 à 6, dans laquelle l'élastomère thermoplastique à base d'oléfine a un module de flexion de 10 MPa ou plus et de 50 MPa ou moins tel que déterminé par une mesure conformément à une méthode de mesure décrite dans la norme JIS K 7171:2008.

8. Procédé de production de la perle expansée en élastomère thermoplastique à base d'oléfine réticulé selon l'une quelconque des revendications 1 à 7, le procédé comprenant :
une étape de dispersion consistant à disperser une perle de polymère à l'état non moussé dans un milieu de dispersion dans un récipient scellé, la perle de polymère contenant le polymère de base et le retardateur de flamme à base de bisphénol bromé ;
une étape de réticulation consistant à faire réagir les perles de polymère avec un peroxyde organique en tant qu'agent de réticulation pour réticuler l'élastomère thermoplastique à base d'oléfine ;
une étape d'imprégnation d'agent d'expansion consistant à imprégner la perle de polymère avec un agent d'expansion pour préparer une perle de polymère expansible ; et
une étape d'expansion consistant à expanser la perle de polymère expansible.

9. Le procédé de production de la perle expansée en élastomère thermoplastique à base d'oléfine réticulé selon la revendication 8, dans lequel une température de réticulation T_{CL} entre l'agent de réticulation et l'élastomère thermoplastique à base d'oléfine dans l'étape de réticulation est supérieure à la température T_{FR} + 30 °C, la température T_{FR} étant la plus basse de la température de transition vitreuse Tg_{FR} et du point de fusion Tm_{FR} du retardateur de flamme à base de bisphénol bromé.
